# EUROPEAN PATENT SPECIFICATION

(11) **EP 1 186 399 B1**
(45) Date of publication and mention of the grant of the patent: **10.12.2003**
(21) Application number: 00119815.9
(22) Date of filing: 12.09.2000
(51) Int. Cl.: B29C 69/00, B29C 33/72, C25F 1/00

(54) **Apparatus for cleaning dies used for moulding synthetic resins**
Vorrichtung zum Reinigen von in der Kunststoffverarbeitung verwendeten Formen
Appareil pour nettoyer les moules employés dans le moulage des résines synthetiques

(43) Date of publication of application: 13.03.2002
(73) Proprietor: Aqua Sonic Service Co., Ltd, T.Bangchalong, A. Bangplee, Samutprakan 10540 (TH)
(72) Inventor: Kitahara, Shoji, Aqua Sonic Service Co., Ltd., A.Bangplee, Samutprakan 10540 (TH)
(74) Representative: Kügele, Bernhard

(56) References cited:
- US-A- 4 762 638
- US-A- 5 024 744
- US-A- 5 104 501
- PATENT ABSTRACTS OF JAPAN vol. 1999, no. 10, 31 August 1999 (1999-08-31) & JP 11 129259 A (SOMAKKUSU KK), 18 May 1999 (1999-05-18)
- PATENT ABSTRACTS OF JAPAN vol. 1997, no. 10, 31 October 1997 (1997-10-31) & JP 09 164533 A (SOMATSUKUSU KK), 24 June 1997 (1997-06-24)
- PATENT ABSTRACTS OF JAPAN vol. 1995, no. 11, 26 December 1995 (1995-12-26) & JP 07 214570 A (SOMATSUKUSU KK), 15 August 1995 (1995-08-15)
- PATENT ABSTRACTS OF JAPAN vol. 1999, no. 10, 31 August 1999 (1999-08-31) & JP 11 128853 A (SOMAKKUSU KK), 18 May 1999 (1999-05-18)

## Description

The field of art to which the invention pertains includes "Maintenance; Cleaning" as contained in IPC B29C. This invention is concerned to -- a medium-sized synthetic resin mould cleaning machine. More detailed, it enables to eliminate the attachments adhering to the resin building side of a mould etc., Such as resin dregs and gas burning, certainly for a short time.

### 2. Description of the prior art:

The resin attachments, such as the burnt remains in a mould to resin dregs and gas to the internal surface of parietal bone in connection with the amount of building of a resin product, are attached.

This attachment worsens the separation of the product after mold which carries out resin building later, and un-arranging, such as being connected with invalid building, produce it.

Especially, according to the upswing of a synthetic resin mold technique, in order to have demanded extraordinary accuracy, this attachment had become the prime factor which worsens mold accuracy in recent years.

In order to eliminate this attachment conventionally, after soaking the metal die component which disassembled the mould in kerosene half a day, the operator was using and polishing with the brush.

However, since a mould is expensive, this polish operation must be performed carefully and is very troublesome so that damage may not be added.

Moreover, in order to take the time for about up to 1 day to polish the metal mould component of a piece, there is also a problem with bad workability.

Firstly the mold automated cleaner Japanese Patent (Tokkai-Hei No. 10-631) using the brush was invented in 1996. Afterwards the cleaning method Japanese Patent (Tokkai-Hei No. 11-90938) using heats penetrating-remover composition as a strong base, or the cleaning method of irradiating or the lasers Japanese Patent (Tokkai-Hei No. 11-99524, U.S. Patent 5373140) were devised. There was also a cleaning station Japanese Patent (Tokkai-Hei No. 11-156865) which injects a liquid for eliminating an attachment.

On the other hand, the cleaning method using the supersonic wave and the electrolysis is indicated Japanese Patent (Tokkai-Hei No. 11-269700, Tokkai-Hei No. 11-129259, Tokkai-Hei No. 11-128853, Tokkai-Hei No. 9-164533, Tokkai-Hei No. 7-214570), which have been put to practical use recently.

While this cleaning method is dipped in the core of the cleaning tank which accommodated electrolytic-cleaning liquid, in the electrode board linked to the anode (+)

By being dipped and making the mould linked to the cathode (-) through above-mentioned electrolytic-cleaning liquid.

It is the cleaning method of the electrolysis formula which the above-mentioned attachment is floated from a mould, and washed from a mould, generating bubbles like electrolysis gas from the core of an electrode board and a mould, floating an attachment using a supersonic wave, and making electrolytic-cleaning liquid agitate by this electrolysis gas.

Reference may be made to US-A-5024744 which describes a stamper cleaning apparatus comprising an electro-cleaning tank for performing electrodegreasing, a washing room adjacent to this cleaning tank, a shower, disposed in the upper section of the washing room, for water-washing a stamper by spraying washing water onto the stamper while the stamper is positioned inside the washing room and is wet with an electrocleaning solution, a water drain tank, disposed in the lower section of the washing room, for collecting water after the stamper is washed with water and for draining the water, and a small drying room disposed in the upper section of the washing room for operating to heat and dry the stamper after the shower has operated during the predetermined time the stamper is held in the washing room.

### Description of invention

Concerning to the prior art, in the case of using the washing method by the above-mentioned prior art electrolysis formula, attachments cannot certainly be removed if the part which die washes is not the position which counters linearly with the above-mentioned electrode board. For example, in the case of a concave slot with a depth of 3 mm, and a width of 2 mm, the base of this slot, i.e., the segment which becomes shade, cannot be washed. Moreover, since it becomes the hindrance of the electric current which sending electric currents, and it becomes hard to generate electrolysis gas, and is therefore connected with the retardation of a work time upwards and a work time becomes long too much, consequently alkali burning generates on the surface of die, which will produce the above-mentioned attachment more.

Furthermore, the churning efficiency of electrolytic-cleaning liquid by the evolution of cracked gas may be scarce, and the eliminated attachment may adhere to die again.

Moreover, concerning to prior art even if it adds the washing method by the ultrasonic vibrator to this, a cleaning effect seldom goes up by the convection current of electrolytic-cleaning liquid. Moreover, if the strong electrolyte of an alkali is kept adhered to die after washing, alkali burning will occur, and there is a possibility that it may become impossible acting an expensive metallic die. Moreover, although there was also apparatus which agitates an electrolyte by the churning component containing an electrode etc. And it was equipment itself becomes too complicated on a device for washing of a detailed die, there was a blemish for which it is not suitable in the die of the magnitude of a degree, in the middle size.

This invention was made in view of the above-mentioned problem and this invention may be for middle sized object for the synthetic resins of the magnitude of a degree (20 cm - 30 cm die length), which can eliminate the attachment adhering to the metallic die certainly for a short time. It aims at offering the washing system of die.

The present invention provides a cleaning machine for cleaning a die used for a synthetic resin mold, the cleaning machine comprising:
a degreasing processing system for degreasing the die;
an electrolytic cleaning system for electrolytically cleaning the die after degreasing; and
a rinse system for rinsing electrolyte from the die after the electrolytic cleaning;
wherein the electrolytic cleaning system comprises:
an electrolysis liquid tank for a liquid cleaning electrolyte;
an electrolyte circulator system for circulating the electrolyte in the tank;
an ultrasonic transducer for generating an ultrasonic wave in the electrolyte in the tank;
a die receipt container for receiving the die after degreasing;
a container hanging implement for hanging the die receipt container in the electrolysis liquid tank for flooding by the electrolyte;
wherein the die receipt container comprises a metal frame constituting a negative electrode for connection to a minus side of a power source, and positive electrode shanks hung on electrode supports of the die receipt container, for connection to a positive side of the power supply.

In a preferred embodiment, the degreasing tank 2 specifically accommodates a degreasing solvent; the cleaning-chemical liquid tank 3 which accommodates electrolytic-cleaning liquid, and the ultrasonic transducer 11 which it is configured ultrasonic transducer on the base outside of the above-mentioned cleaning-chemical liquid tank 3, and vibrates above-mentioned electrolytic-cleaning liquid; the retention stick which accommodates a washed thing in the core of metal frame body, and projects from frame body 9-1, which hanging and dipping a washed thing into the above-mentioned cleaning-chemical liquid tank 3, while it loads freely and flooding with above-mentioned electrolytic-cleaning liquid; the above-mentioned retention implement which consists of conductive metal frame-like basket 4 which has a terminal linked to a cathode (-); the electrode 12-1 of the connected shape equipped with the crookedness part to which the edge hangs to the above-mentioned cleaning-chemical liquid tank 3 up side while connecting with an anode (+); and a tail end is dipped in above-mentioned electrolytic-cleaning liquid the excretory open of pipe in an end of electrolytic-cleaning liquid of the above-mentioned cleaning-chemical liquid tank 3, and eject electrolytic-cleaning liquid in the cleaning-chemical liquid tank 3; the purification system which carried out its ejection with the filtration apparatus with which connected the other ends side of these excretory pipes; the pump for a circulation which connects with this purification device and absorbs washed electrolytic-cleaning liquid; its end is installed in the drain hole of this pump for a circulation, other ends are piped at right angles to corner of the above-mentioned cleaning-chemical liquid tank 3. While it has the feed pipe which discharges washed electrolytic-cleaning liquid which is ejected from the above-mentioned pump for a circulation so that electrolytic-cleaning liquid in the cleaning-chemical liquid tank 3 may always reflux ; therefore the supersonic wave from an ultrasonic transducer eliminates an attachment from the exterior of a washed thing; an attachment is floated by hydrogen gas which is made to sending electric current an electrode and a washed thing through basket 4, carrying out an electrolysis. The attachment inside of the cleaning-chemical liquid tank 3 was circulated, and was floated, so the above-mentioned pump for a circulation 8 washing above-mentioned electrolytic-cleaning liquid, and the attachment is eliminated. Then, a rinse tank is made to carry out transfer dipping of metal basket 4 by which is hung and the concerned washed thing was contained more in detail, and elimination washing of an electrolyte and the attachment is carried out completely.

### Brief explanation of the drawings

Fig. 1 it is the perspective diagram showing the whole washing system of this invention.

Fig. 2 it is the organization chart of the whole washing system of this invention.

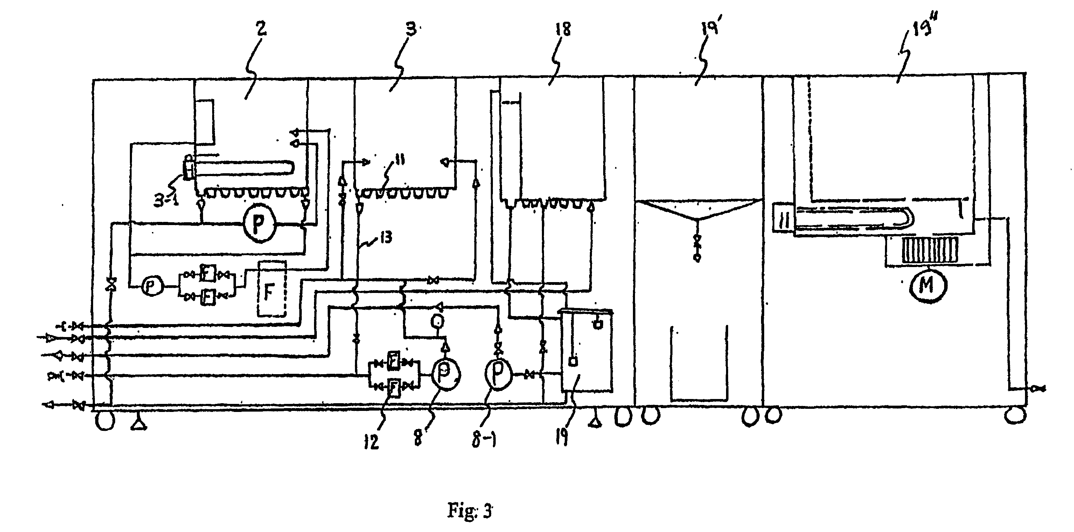

Fig. 3 it is the organization chart of other cases of the operation of the whole washing system of this invention.

Fig. 4 it is the perspective diagram of the integrity that put the washed thing on basket 4 and the electrode was attached.

Fig. 5 it is the perspective diagram showing the pipe-arrangement integrity of electrolytic-cleaning liquid through which it circulates.

### Detailed description

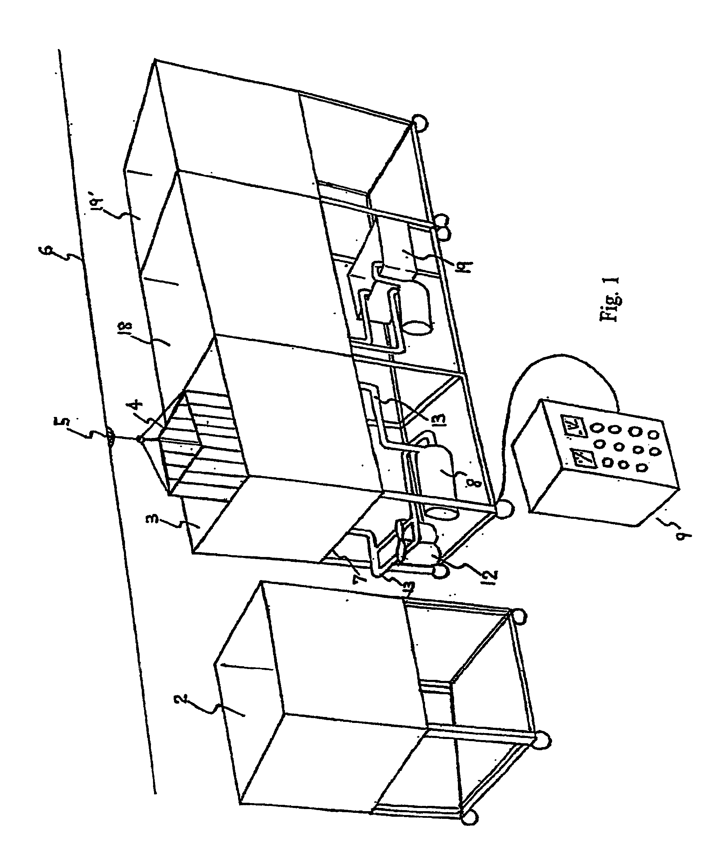

Hereafter, it discloses the detailed description referring to drawing, and it demonstrates in detail. Fig. 1 shows the washing system of synthetic resin metal die of this invention, it consists of a degreasing processing device, an electrolytic-cleaning device, and a rinse device; this electrolytic-cleaning device uses together the washing method of a ultrasonic method and an electrolysis formula; and attachments, such as the resin adhering to washed things (not shown), such as die, are eliminated certainly for a short time.

The degreasing processing device 2 adjoins an electrolytic-cleaning device, as shown in fig. 1, and it is established, organic degreasing solvents, such as ether and an alcohol, are accommodated in the tank of the magnitude of the same size as an electrolytic-cleaning tank; washed thing is put in basket 4, warming solvents with heating equipment 3-1, it carries out dipping with the hanging implement 5 at the degreasing tank 2, and degreasing dispensation is performed. Then, it takes out from the degreasing tank 2, and is made to transfer to the electrolytic-cleaning tank 3.

The hanging implement 5 which the electrolytic-cleaning device 3 forms the rail 6 drawn from the degreasing device upside, and was hung by this rail 6, basket 4 which consists of a washed thing retention implement which accommodates a washing thing on the basement divided into the vertical two stage with the trader board 7; the basket is able to settle or unsettle freely; the cleaning-chemical liquid tank 3 which accommodated electrolytic-cleaning liquid; and a sewage purifier and the pump for a circulation 8 are configured, respectively, and the power transducer for electrolysis 9 is installed beside the basement

As above-mentioned electrolytic-cleaning liquid, alkali solution, contained from about 1.5 to about 10%by weight of sodium hydroxide, from about 4 to about 20 %by weight of EDTA (ethylene diamine tetra acetic acid), and from about 4.5 to about 24 % by weight of surface active agents and residue is water.

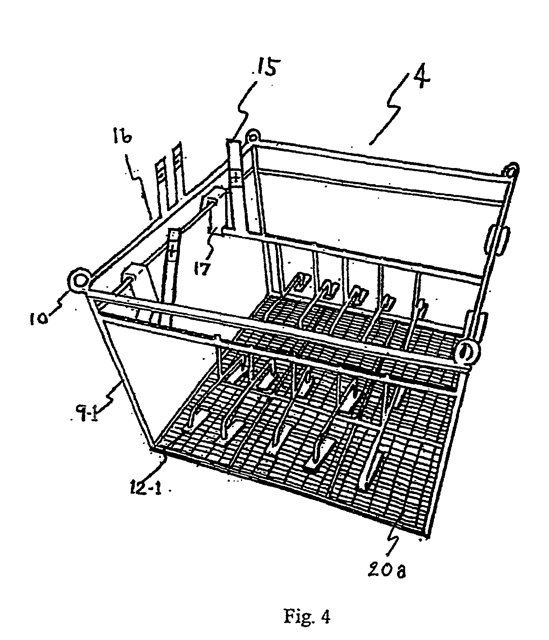

As it is formed with the materials which has the conductivity of stainless steel etc. And it is shown in fig. 4, above-mentioned basket 4 prepares frame body 20a (diameter of 3 mm) of the rectangular parallelepiped made into smaller size than the above-mentioned cleaning-chemical liquid tank 3, and the cylindrical lattice laid in the four sides of the frame body 9-1 which prepared spacing to which a washed thing does not fall in a field except the top part. Moreover, the retention stick 10 is made to project in the four corners of the superior extremity of frame body 9-1 up, and is formed in it, respectively. The basket 4 is in the integrity with which it loaded in the above-mentioned cleaning-chemical liquid tank 3, and is established as the grade to which a side does not contact the base of the cleaning-chemical liquid tank 3.

The above-mentioned cleaning-chemical liquid tank 3 is a product made from stainless steel, and its internal capacity of 200 liter is desirable.

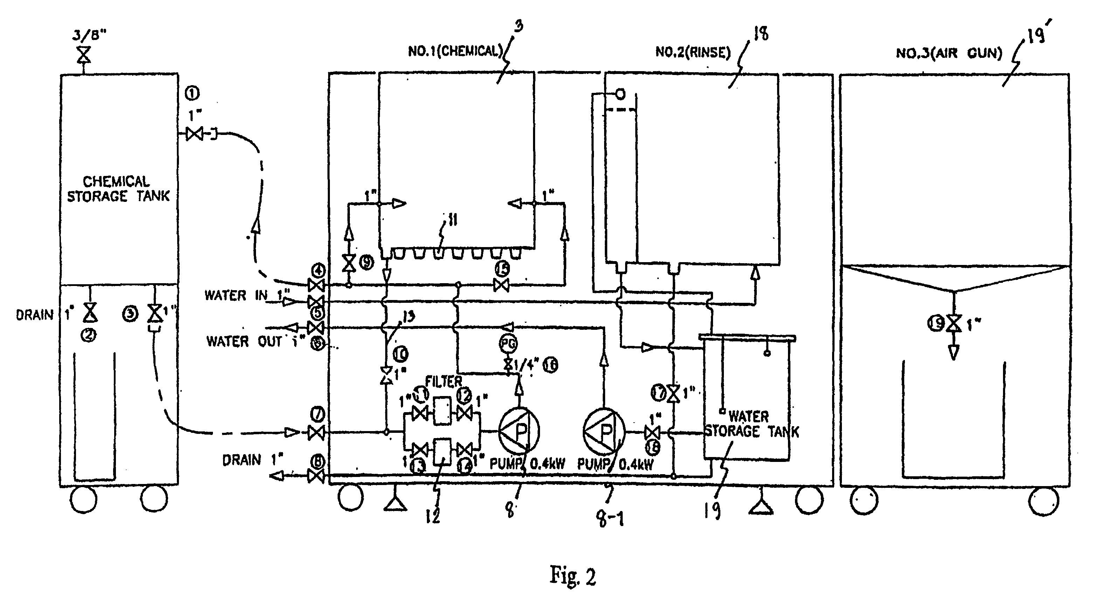

In order to conduct a ultrasonic washing method in the base outside of the cleaning-chemical liquid tank 3, as shown in fig. 2, the ultrasonic transducer 11 which connects with the above-mentioned power supply box 9, and the number of ultrasonic transducer module is from 6 to 48 which are located in longitudinal direction and in side direction by necessary spacing each one. It is desirable to install resonance inhibition material among these ultrasonic transducers.

Two metal sticks are installed in basket 4 through the insulating material made from a synthetic resin at a lengthening joint. In every stick, it hangs, and pegs to the concerned metal stick, and eight electrodes 12-1 which are made to flood in the center section of the cleaning-chemical liquid tank 3. While the anode (+) side of the direct current applied through the above-mentioned transducer for electrolyses 9 later mentioned to this electrode 12-1 is connected, connect a cathode (-) side to above-mentioned basket 4, and it is made to sending electric current through above-mentioned electrolytic-cleaning liquid, and is made to conduct an electrolysis formula. The material used as usual electrodes, such as graphite, can be used for an electrode 12-1.

In the circulation device of electrolytic-cleaning liquid, the bobbin-winding-like filter (5micro-10micro) 12 of which has a filtration work in the above-mentioned sewage purifier, and washes electrolytic-cleaning liquid, it discharges in the cleaning-chemical liquid tank 3 with the above-mentioned pump for a circulation 8 and electrolytic-cleaning liquid in this cleaning-chemical liquid tank 3 is circulated, the electrolyte circulator style in an electrolytic-cleaning device ejects excessive electrolytic-cleaning liquid to overflow, to the above-mentioned sewage purifier, and is made to circulate through electrolytic-cleaning liquid.

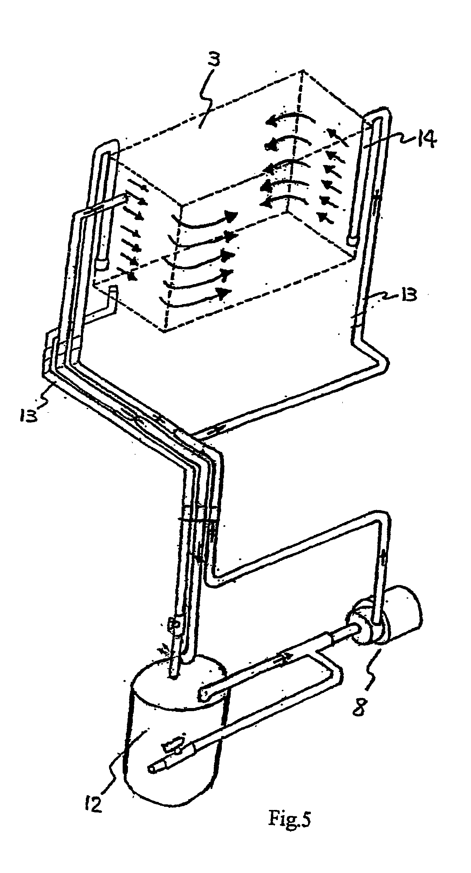

That is, as shown in fig. 5, the sewage purifier 12 and the inhalation mouth of the pump for a circulation 8 which have been configured in the lower berth of the basement are connected with a feed pipe 13, and it has connected with the feed pipe 13 which made the drain hole and the cleaning-chemical liquid tank 3 of the pump for a circulation 8 correspond to the basement, and made it a necessary configuration flexed. This feed pipe 13 has branched to 2 methods through intermediate pipe by the site located in the upper row, and feed pipes 13 and 13 are placed at the corner which carries out a diagonal in the lengthening-joint ends of the cleaning-chemical liquid tank 3.

While these feed pipes 13 and 13 are made to extend to the corner of the cleaning-chemical liquid tank 3 to near the base perpendicularly from upper-end side and blockade the tail end part by the top end part, they open necessary spacing in the side part by the side of corner part of the adjoining width direction at a lengthening joint (perpendicular), and there are the multiple discharge hole 14. In addition, these feed pipes 13 and 13 have piped so that it may not stick to basket 4 accommodated in the cleaning-chemical liquid tank 3. Moreover, in the cleaning-chemical liquid tank 3, the liquid-level location of the integrity that electrolytic-cleaning liquid of necessary quantity was accommodated in the core is piped in excretory duct, and these excretory duct are connected to the sewage purifier of the lower berth.

Therefore, as shown in fig. 5, electrolytic-cleaning liquid is absorbed through a feed pipe 13 from a sewage purifier 12 by the driving of the pump for a circulation 8, and this electrolytic-cleaning liquid is discharged in the cleaning-chemical liquid tank 3 through feed pipes 13 and 13 from this pump for a circulation 8. In this cleaning-chemical liquid tank 3, it discharges to the same hoop direction by the discharge hole 14 of the above-mentioned feed pipes 13 and 13, and electrolytic-cleaning liquid convects. The convection current of this electrolytic-cleaning liquid serves as the flat flow rate between the upper and lower sides of the cleaning-chemical liquid tank 3 by the above-mentioned discharge hole 14. Moreover, electrolytic-cleaning liquid overflowed by this feed is ejected by the sewage purifier 12 through the above-mentioned excretory duct 13, the attachment mixed in electrolytic-cleaning liquid with the above-mentioned bobbin-winding filter 12 is eliminated, and washed electrolytic-cleaning liquid is again applied in the cleaning-chemical liquid tank 3. Moreover, when an electrolyte reduces, electrolytic-cleaning liquid can also be refilled at any time from a service tank.

In order for washed things to contact by the liquid style and to damage in many while the convection and the churning effectiveness of electrolytic-cleaning liquid fall and elimination efficiency becomes bad, in being few, the flow rate of electrolytic-cleaning liquid by the above-mentioned pump for a circulation 8 is established corresponding to the magnitude of a washed thing, and the capacity of the cleaning-chemical liquid tank 3, and is established as about 100 liter per minute.

Furthermore, the base of the cleaning-chemical liquid tank 3 is piped in a waste-lye pipe, and the nose of cam in which the drain cock was prepared is made to extend to near the above-mentioned sewage purifier 12. And the waste-lye pipe 13 which prepared the drain cock also in the interval of the feed pipe 13 which connects a sewage purifier 12 and the pump for a circulation 8, at the nose of cam through intermediate pipe is piped, and a washed thing is washed and it enables it to eject outside unclean electrolytic-cleaning liquid timely with a hose etc.

An exchange electric current is applied from the power source of a work, and the above-mentioned power supply box 9 applies the exchange electric current to an ultrasonic transducer 11, and makes a supersonic wave send. Moreover, after applying an exchange electric current to the above-mentioned transducer for electrolyses simultaneously, while the direct current transformed by this transducer for electrolyses is received and an anode current is applied to an electrode 12-1, apply a cathode current to basket 4, and it is made to sending electric current through electrolytic-cleaning liquid, and is made to carry out an electrolysis.

As shown in figs. 1 and 4, anode terminal and cathode terminal by which the anode (+) electric current from the above-mentioned transducer for electrolyses 9 and a cathode (-) electric current are applied to a power supply box 9 in the front-face side. While the connection cord which prepared is connected anode terminal to the electrode shank 15, the connected connection cord which connected with cathode terminal to the positioning part 16 of the longitudinal-joint both sides of above-mentioned basket 4 (figure 4 references). Thus, pass again the direct current from the above-mentioned transducer for electrolyses 9 through basket 4 to an electrode 12-1 at a washed thing, so it is made to sending electric current through electrolytic-cleaning liquid, and it is made to wash an electrolysis formula. In addition, since insulated dispensation is made by the electrode supports 17 of the electrode shank 15 while insulated dispensation is given to the cleaning-chemical liquid tank 3 by the above-mentioned synthetic resin insulating material, the problem of a short circuit does not arise.

Moreover, the pilot lamp lighted at the time of sending electric current of the main power supply interlocked with an activity timer and a main power supply and the wall socket which is interlocked with an activity timer and outputs AC 100V-230V are prepared in the power supply box 9.

Since a cleaning effect will fall off if too low while alkali burning will arise in a washed thing, if too high, the electrical potential difference outputted from the above-mentioned output part prepares the voltage-regulation volume for adjusting an output voltage, and is made to establish an output voltage as 7-8 V, and 161A which is depended on a size of die. Moreover, the pilot lamp which displays the releasing of a power supply switch and the transducer for electrolyses is formed in the transducer for electrolyses 9. In addition, the power supply box 9 and the transducer for electrolyses of the above-mentioned structure can also be formed in one.

The rinse device 18 overflows waste rinse liquid from a rinse tank to the waste rinse liquid storage tank 19 which contains level switch for controlling waste rinse liquid discharge pump, applying rinse liquid with the pipe which adjourn with the electrolysis device and has the tank made from stainless steel of the same size as the cleaning-chemical liquid tank 3. You move the washed thing washed with the cell to the rinse tank 18 from the hanging implement 5 with basket 4, and it is made the liquid which has rinse works, such as water, to be dipped, and the electrolyte of a strong base is washed at the same time it eliminates an attachment further.

The above-mentioned washing system is operated at the following processes, and washes a washed thing. First, after hanging the thing (metal dies) washed which was contained to basket 4 which removed electrode after adding electric heat to the degreasing tank 2 which accommodated the solvent and warming, the basket 4 including washed things are more dipped in the degreasing tank 2 in detail and carrying out fixed time dipping, and after that, it hangs again, and a washed thing is further transferred to a electrolysis system with basket 4.

After it confirms that the main power supply (not shown in the figure) is in off integrity, you can connect in connection cord, the cord by the side of the electrode shank 15 and the anode of a power supply box 9, and the cord by the side of the edge of the positioning part 16 of basket 4 and the cathode of a power supply box 9 are connected.

Next, electrolytic-cleaning liquid is accommodated in the cleaning-chemical liquid tank 3 and a sewage purifier. Subsequently, a washed thing is accommodated in the center of basket 4. Subsequently, an electrode 12-1 is attached and hung, and above-mentioned basket 4 is hung inside the cleaning-chemical liquid tank 3, it transfers, and basket 4 is pegged more.

Afterwards, the main power supply of the above-mentioned power supply box 9 is inputted, an activity timer is operated, and the washing operation of a washed thing is performed. That is, while a supersonic wave is oscillated from an ultrasonic transducer 11, the above-mentioned pump for a circulation 8 is made to actuate, and electrolytic-cleaning liquid in the cleaning-chemical liquid tank 3 is convected and circulated.

With a washed thing, although time differs, after the fixed setup time finalizes it, the above-mentioned activity timer manually or automatically stops the feed of the electric current to the pump 8 and the driver for ultrasonic transducers 11, the releasing of each part is stopped, and the activity timer of the above-mentioned power supply box 9 stops shaking of electrolytic-cleaning liquid and the electrolytic action of a washed thing and the electrode 12-1.

While the washing system of this invention which used together the electrolysis formula and the washing formula of a ultrasonic method abolishes an attachment from the exterior of a washed thing by the washing method of a ultrasonic method, an attachment is floated from a washed thing by hydrogen gas which generates inside by the washing method of an electrolysis formula, and it eliminates an attachment from a washed thing by the reflux of electrolytic-cleaning liquid.

The eliminated attachment rides on the reflux of above-mentioned electrolytic-cleaning liquid, and is ejected from the above-mentioned excretory duct 13 to the bobbin-winding filter 12, and separation elimination is carried out from electrolytic-cleaning liquid. That is, since the eliminated attachment has inhibited adhering to a washed thing again, the washing efficiency of a washed thing can be raised more and the life of electrolytic-cleaning liquid can be made to live long.

After electrolytic-cleaning finalizing, it hangs again, a washed thing is transferred to the rinse tank 18 with basket 4 by hanging tool 5, it is dipped in the rinse tank 18 which filled rinse liquid, such as water, beforehand, and the electrolyte and the attachment adhering to the washed thing are washed out by overflowing. Then, it hangs, a washed thing is lifted with basket 4 by hanging tool 5, and it transfers to another booth 19', and an adhering liquid is blown away and it is made to dry according to air gun. Then it is taken out from the booth 19' and transferred to booth 19'' which has humidity decreasing device. Therefore remainder-humidity is eliminated by using hot air passing through it.

According to the washing station concerning this invention, it has the following effectiveness so that clearly from the above representation. First, compared with the electrolytic-cleaning apparatus which has configured only the usual electrolyzer, by giving electrolyte rinse dispensation of degreasing processing of pretreatment, and aftertreatment, the cleaning effect of an attachment is markedly easy coming to be alike, and alkali burning can inhibit to an authenticity.

The ultrasonic transducer which a supersonic wave is sent to the base of the cleaning-chemical liquid tank 3 which accommodates electrolytic-cleaning liquid, vibrates electrolytic-cleaning liquid. And it enables it to wash in the electrolysis the washed thing by the ultrasonic method. Moreover, the above-mentioned cleaning-chemical liquid tank 3 has the retention implement loading freely with conductivity, which contains the washed thing connected the electrode. The retention implement accommodates a washed thing, connecting a cathode (-), and is dipped in electrolytic-cleaning liquid with the anode (+), and the cathode through the above-mentioned retention implement is made to sending electric current, and an electrolysis formula can be done.

Since an operation can be performed to basket 4 which hung these a series of operations where a washed thing is placed, activity efficiency can be good, and can prevent the damage to the electrolyte attachment to an operator to the minimum extent, and it can work in the very safe integrity. Moreover, since it becomes a series of operation and the washed thing of the various sizes from a detailed metallic pattern to a medium-sized metallic pattern can be acted, it is efficient.

Moreover, when the bobbin-winding filter was made to be placed between the above-mentioned sewage purifier between the above-mentioned excretory duct and the pump for a circulation, the attachment eliminated from the washed thing as mentioned above rides on the convection current of electrolytic-cleaning liquid and is ejected from excretory duct by this washing system. So the above-mentioned filter separates these attachment. That is, by applying only washed electrolytic-cleaning liquid in the cleaning-chemical liquid tank 3, when the attachment once eliminated carries out adhesion elimination again at a washed thing, the time which can live the life of electrolytic-cleaning liquid long and its electrolyte suitably is also saved, and activity efficiency improves.

Moreover, in this washing system, the alkali solution which consists of sodium hydroxide from about 1.5 to about 10 %by weight, EDTA from about 4 to about 20 %by weight, from about 4.5 to about 24 %by weight of a surface active agent contained Rₙ-COOH which R is (CH₂=CH-) and n is integer number from 20 to 28, and water is used for electrolytic-cleaning liquid. Therefore, sending electric current with an electrode is certainly performed in the above-mentioned washed thing.

### Description of drawing code :

- 2: Degreasing tank
- 3: Cleaning-chemical liquid tank
- 3-1: Heating equipment
- 4: Basket
- 5: Hanging implement
- 6: Rail
- 8: Chemical circulation pump
- 8-1: Waste rinse liquid discharge pump
- 9: Power supply box for electrolysis
- 9-1: Frame body
- 10: Retention stick
- 11: Ultrasonic transducer
- 12: Sewage purifiers
- 12-1: Electrode
- 13: Feed pipes
- 14: Discharge hole
- 15: Electrode shank
- 16: Positioning part
- 17: Electrode supports
- 18: Rinse tank
- 19: Waste rinse liquid storage tank
- 19': Drying booth
- 19'': Humidity decreasing booth

## Claims

1. A cleaning machine for cleaning a die used for a synthetic resin mold, the cleaning machine comprising:
a degreasing processing system for degreasing the die;
an electrolytic cleaning system for electrolytically cleaning the die after degreasing; and
a rinse system for rinsing electrolyte from the die after the electrolytic cleaning;
wherein the electrolytic cleaning system comprises:
an electrolysis liquid tank (3) for a liquid cleaning electrolyte;
an electrolyte circulator system (8) for circulating the electrolyte in the tank;
an ultrasonic transducer (11) for generating an ultrasonic wave in the electrolyte in the tank;
a die receipt container (4) for receiving the die;
a container hanging implement (5, 6) for hanging the die receipt container in the electrolysis liquid tank for flooding by the electrolyte;
wherein the die receipt container (4) comprises a metal frame (20a) constituting a negative electrode for connection to a minus side of a power source, and positive electrode shanks (12-1) hung on electrode supports of the die receipt container, for connection to a positive side of the power supply.

2. A cleaning machine as defined in claim 1, wherein the degreasing processing system comprises a degreasing tank (2) for containing a degreasing solvent, and heating apparatus.

3. A cleaning machine as defined in claim 1 or 2, wherein the electrolyte circulator system comprises an electrolyte feed tank, an electrolyte filter (12), and a circulation pump (8).

4. A cleaning machine as defined in claim 1, 2 or 3, wherein the electrolyte rinse system comprises an electrolyte rinse tank (18) located separately from the electrolysis liquid tank (3), and means for flooding a washed thing with rinse liquid.

5. A cleaning machine according to claim 4, further comprising a humidity decreasing system for decreasing the humidity after the rinse system, the humidity decreasing system comprising a humidity decreasing booth (19" ), a heating apparatus and a blower for blowing heated air to the die in the humidity decreasing booth.

6. A cleaning machine as defined in any preceding claim, the cleaning system further comprising said electrolyte, wherein the electrolyte comprises an alkali metal hydroxide, a chelating agent, a surface active agent, and water.

7. A cleaning machine according to claim 6, wherein the electrolyte is an alkali solution comprising:
a) from about 4 to about 20 %by weight of the chelating agent;
b) from about 1.5 to about 10 %by weight of the alkali metal hydroxide;
c) from about 4.5 to about 24 %by weight of the surface active agent;
d) the remainder being water.

8. A cleaning machine according to claim 7, wherein the chelating agent is EDTA.

9. A cleaning machine according to claim 7 or 8, wherein the alkali metal hydroxide is sodium hydroxide (NaOH).

10. A cleaning machine according to claim 7, 8 or 9, wherein the surface active agent is: 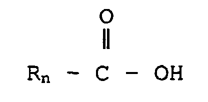 wherein R represents (CH₂ = CH - ) and n is an integer number from 20 and 28.

11. A cleaning machine according to claim 7, 8, 9 or 10, wherein the electrolyte has a pH value of about 12 to about 14.

## Patentansprüche

1. Reinigungsmaschine zum Reinigen einer für ein Kunstharz-Presswerkzeug verwendeten Form, wobei die Reinigungsmaschine
ein Entfettungs-Verarbeitungssystem zum Entfetten der Form;
ein elektrolytisches Reinigungssystem zum elektrolytischen Reinigen der Form nach dem Entfetten; und
ein Spülsystem zum Abspülen des Elektrolyten von der Form nach dem elektrolytischen Reinigen umfasst;
worin das elektrolytische Reinigungssystem
einen Elektrolyseflüssigkeitstank (3) für einen flüssigen Reinigungselektrolyten;
ein Elektrolytumlaufsystem (8) für den Elektrolytumlauf im Tank;
einen Ultraschallumformer (11) zum Erzeugen einer Ultraschallwelle im Elektrolyten im Tank;
einen Formaufnahmebehälter (4) zum Aufnehmen der Form;
eine Behälter-Aufhängevorrichtung (5, 6) zum Aufhängen des Aufnahmebehälters im Elektrolyseflüssigkeitstank zum Überfluten durch den Elektrolyten umfasst; und
worin der Formaufnahmebehälter (4) einen Metallrahmen (20a), der eine negative Elektrode zum Anschluss an den Minuspol einer Stromquelle darstellt, sowie an Elektrodenträger des Formaufnahmebehälters (4) angehängte positive Elektrodenfahnen (12-1) zum Anschluss an den Pluspol der Stromquelle umfasst.

2. Reinigungsmaschine, wie in Anspruch 1 definiert, worin das Entfettungs-Verarbeitungssystem einen Entfettungstank (2) zur Aufnahme eines entfettenden Lösungsmittels sowie eine Heizvorrichtung umfasst.

3. Reinigungsmaschine, wie in Anspruch 1 oder 2 definiert, worin das Elektrolytumlaufsystem einen Elektrolytzufuhrtank, ein Elektrolytfilter (12) sowie eine Umlaufpumpe (8) umfasst.

4. Reinigungsmaschine, wie in Anspruch 1, 2 oder 3 definiert, worin das Elektrolytspülsystem einen Elektrolytspültank (18), der getrennt vom Elektrolyseflüssigkeitstank (3) angeordnet ist, sowie Mittel zum Überfluten eines gewaschenen Gegenstandes mit Spülflüssigkeit umfasst.

5. Reinigungsmaschine nach Anspruch 4, weiter ein Entfeuchtungssystem zum Herabsetzen der Feuchtigkeit nach dem Spülsystem umfassend, wobei das Entfeuchtungssystem eine Entfeuchtungskammer (19"), eine Heizvorrichtung sowie ein Gebläse zum Blasen aufgewärmter Luft auf die Form in der Entfeuchtungskammer umfasst.

6. Reinigungsmaschine, wie in einem beliebigen vorangehenden Anspruch definiert, wobei das Reinigungssystem weiter diesen Elektrolyten umfasst und worin der Elektrolyt ein Alkalimetallhydroxid, einen Chelatbildner, ein Tensid sowie Wasser umfasst.

7. Reinigungsmaschine nach Anspruch 6, worin der Elektrolyt eine Alkalilösung ist, die aus
a) etwa 4 bis etwa 20 Gewichtsprozent des Chelatbildners,
b) etwa 1,5 bis etwa 10 Gewichtsprozent des Alkalimetallhydroxids,
c) etwa 4,5 bis etwa 24 Gewichtsprozent des Tensids besteht,
d) während der Rest Wasser ist.

8. Reinigungsmaschine nach Anspruch 7, worin der Chelatbildner EDTA ist.

9. Reinigungsmaschine nach Anspruch 7 oder 8, worin das Alkalimetallhydroxid Natriumhydroxid (NaOH) ist.

10. Reinigungsmaschine nach Anspruch 7, 8 oder 9, worin das Tensid 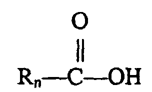 ist, worin R (CH₂=CH―) darstellt und n eine ganze Zahl zwischen 20 und 28 ist.

11. Reinigungsmaschine nach Anspruch 7, 8, 9 oder 10, worin der Elektrolyt einen pH-Wert von etwa 12 bis etwa 14 hat.

## Revendications

1. Machine de nettoyage destinée à nettoyer une matrice utilisée pour un moule de résine synthétique, la machine de nettoyage comprenant :
un système de traitement de dégraissage destiné à dégraisser la matrice,
un système de nettoyage électrolytique destiné à nettoyer de façon électrolytique la matrice après dégraissage,
un système de rinçage destiné à rincer l'électrolyte de la matrice après le nettoyage électrolytique,
où le système de nettoyage électrolytique comprend :
un réservoir de liquide d'électrolyse (3) destiné à un électrolyte de nettoyage liquide,
un système de circulateur électrolyte (8) destiné à faire circuler l'électrolyte dans le réservoir,
un transducteur à ultrasons (11) destiné à générer une onde ultrasonore dans l'électrolyte dans le réservoir,
un récipient de réception de matrice (4) destiné à recevoir la matrice,
un ustensile d'accrochage de récipient (5, 6) destiné à accrocher le récipient de réception de matrice dans le réservoir de liquide d'électrolyse pour un noyage par l'électrolyte,
où le récipient de réception de matrice (4) comprend une masse métallique (20 a) constituant une électrode négative pour la liaison au coté négatif de la source d'énergie, et des tiges d'électrodes positives (12-1) accrochées à des supports d'électrodes du récipient de réception de matrice, pour une connexion au coté positif de l'alimentation électrique.

2. Machine de nettoyage telle que définie dans la revendication 1, dans laquelle le système de traitement de dégraissage comprend un réservoir de dégraissage (2) destiné à contenir un solvant de dégraissage, et un dispositif de chauffage.

3. Machine de nettoyage selon la revendication 1 ou la revendication 2, dans laquelle le système de circulateur d'électrolyte comprend un réservoir d'alimentation en électrolyte, un filtre d'électrolyte (12) et une pompe de circulation (8).

4. Machine de nettoyage selon la revendication 1, 2 ou 3,
dans laquelle le système de rinçage d'électrolyte comprend un réservoir de rinçage d'électrolyte (18) situé à l'écart du réservoir de liquide d'électrolyse (3), et un moyen de noyage d'un objet lavé avec un liquide de rinçage.

5. Machine de nettoyage selon la revendication 4, comprenant en outre un système de réduction d'humidité destiné à réduire l'humidité après le système de rinçage, le système de réduction d'humidité comprenant une cabine de déshumidification (19"), un dispositif de chauffage et une soufflerie destinée à souffler de l'air chauffé vers la matrice dans la cabine de déshumidification.

6. Machine de nettoyage selon l'une quelconque des revendications précédentes, le système de nettoyage comprenant en outre ledit électrolyte, ou l'électrolyte comprend un hydroxyde de métal alcalin, un agent chélatant, un tensioactif et de l'eau.

7. Machine de nettoyage selon la revendication 6, dans laquelle l'électrolyte est une solution alcaline comprenant :
a) d'environ 4 à environ 20 % en poids d'agents chélatants ;
b) d'environ 1,5 à environ 10 % en poids d'hydroxyde de métal alcalin ;
c) d'environ 4,5 à environ 24 % en poids d'agent tensioactif ;
d) le reste étant de l'eau.

8. Machine de nettoyage selon la revendication 7, dans laquelle l'agent chélatant est de l'acide éthylène diamine-tretraacétique (EDTA).

9. Machine de nettoyage selon la revendication 7 ou 8, dans laquelle l'hydroxyde de métal alcalin est de l'hydroxyde de sodium (NaOH).

10. Machine de nettoyage selon la revendication 7, 8 ou 9
dans laquelle l'agent tensioactif est : 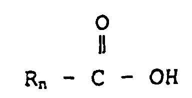 où R représente (CH₂ = CH -) et n est un nombre entier entre 20 et 28.

11. Machine de nettoyage selon la revendication 7, 8, 9 ou 10, où l'électrolyte a une valeur de pH entre environ 12 et environ 14.
